# EUROPÄISCHE PATENTANMELDUNG

(11) **EP 4 745 722 A1**
(43) Veröffentlichungstag der Anmeldung: **20.05.2026**
(21) Anmeldenummer: 25208459.5
(22) Anmeldetag: 14.10.2025
(51) Int. Cl.: G06F 3/01, A47J 37/00, F24C 7/08

(54) **ELEKTRISCHES GERÄT**

(30) Priorität: 19.11.2024 LU 103455
(71) Anmelder: Miele & Cie. KG, 33332 Gütersloh (DE)
(72) Erfinder: Schneider, Daniel, 33415 Verl (DE)

(57) **Zusammenfassung**

Die Erfindung betrifft ein elektrisches Gerät mit
- einer Oberfläche (1),
- einem Sensor, der ausgebildet ist, eine von der Oberfläche (1) räumlich entfernte Zeigeposition (3) eines Nutzers (4) in Richtung der Oberfläche zu sensieren,
- einer Visualisierungseinheit (2), welche ausgebildet ist, die sensierte Zeigeposition (3) auf der Oberfläche (1) bewegungssynchron mit einer Zeigebewegung des Nutzers (4) anzuzeigen.

## Beschreibung

Die Erfindung betrifft ein elektrisches Gerät. Insbesondere betrifft die Erfindung ein elektrisches Gerät mit einer Oberfläche.

Es ist bekannt, dass ein Nutzer ein elektrisches Gerät mittels berührungsloser Gesten bedienen kann. Dazu muss er eine Auswahl zuvor festgelegter Bewegungsabläufe, d.h. Gesten kennen, denen jeweils eine vorbestimmte Funktion und/oder Aktion zugeordnet wurde. Bei einer erfolgreichen Erkennung eines solchen definierten Bewegungsablaufs durch eine entsprechend ausgebildete Einheit des elektrischen Geräts folgt die entsprechende Aktion. Diese Art der Bedienung setzt das Erlernen der festgelegten Bewegungsmuster voraus. Besteht die Bedienung aus mehreren Gesten, die dem Nutzer nicht bereits aus anderen Anwendungen bekannt sind, wird die Akzeptanz für das Erlernen dieser Bewegungsmuster gering sein. Weiterhin nachteilig ist, dass für ein sicheres Unterscheiden verschiedener Bewegungsmuster möglichst ausladende Bewegungen erforderlich sind.

Solch ausladende Bewegungen sind jedoch eher unnatürlich. Insbesondere eine Abfolge mehrerer ausladender Bewegungen nacheinander, z.B. um einen Parameter zu erhöhen oder zu reduzieren, stellt keinen ergonomischen Bewegungsablauf dar. Zudem ist die Wiederholung einer identischen Bewegung, um z.B. Parameter durch z.B. Wischbewegungen zu erhöhen oder zu reduzieren, lästig, zeitraubend und ggf. sogar anstrengend. Der Nutzer erhält zudem während des Bedienens keinerlei Rückmeldung, ob die momentan ausgeführte Bewegung zielführend ist oder ob diese in einer Fehlinterpretation enden wird. Der Nutzer muss jeweils die vollständige Eingabe bzw. Bewegung durchführen und dann abwarten, ob die gewünschte Aktion tatsächlich ausgeführt wird. Dadurch ist die Dauer der Bedienung bis zum gewünschten Resultat relativ zeitaufwändig.

Der Erfindung stellt sich somit das Problem, ein elektrisches Gerät bereitzustellen, dessen Bedienung schnell, ergonomisch und logisch ist. Es soll die Akzeptanz einer berührungslosen Bedienung deutlich steigern, keine ,Spezialgesten' des Nutzers zur Bedienung benötigen und eine bewegungssynchrone Rückmeldung zur Eingabe bereitstellen.

Erfindungsgemäß wird dieses Problem durch ein elektrisches Gerät mit den Merkmalen des Patentanspruchs 1 gelöst. Vorteilhafte Ausgestaltungen und Weiterbildungen der Erfindung ergeben sich aus den nachfolgenden Unteransprüchen.

Die mit der Erfindung erreichbaren Vorteile bestehen darin, dass die Bedienung und/oder Nutzung des elektrischen Geräts kein Erlernen eines bestimmten Gestenalphabetes erfordert, sondern vielmehr eine selbsterklärende Interaktion mit natürlichen und/oder ergonomische Bewegungen bereitgestellt wird, die wenig anstrengend sind, da nur kurze Bewegungen und wenig ausladende Bewegungen erforderlich sind. Zudem ist eine Dauer für eine Eingabe kürzer als bei klassischer Gestenbedienung. Ferner wird ein eindeutiges, synchrones Feedback zur Nutzerinteraktion bereitgestellt.

Die Gefahr einer Fehlbedienung kann durch ein solches System entsprechend verringert werden. Das Bedienen des Gerätes durch Zeigen auf die gewünschte Funktion, ohne die tatsächliche Bedienoberfläche berühren zu müssen (verglichen mit einer Touchbedienung), erlaubt eine Eingabe auch mit verschmutzten Händen (z.B. Bedienung des Backofens während des Knetens eines Teiges). Ein weiterer Vorteil einer Bedienung durch das Auswerten der tatsächlichen Zeigeposition besteht in der Möglichkeit, Interaktionen auch bei einem größeren Abstand zum Gerät sicher zuordnen zu können. So könnte auch das Bedienen einer Geräteoberfläche durch einen Nutzer aus mehreren Metern Entfernung sicher zugeordnet werden. Bei Verwendung einer klassischen Bedienung, die lediglich auf bestimmte Bewegungsmuster reagiert, kann es bei einem größeren Abstand zu dem zu bedienenden Gerät bzw. beim Vorhandensein mehrerer Geräte mit einem solchen Bedienkonzept zu Fehlbedienungen aufgrund einer falschen Zuordnung der Bedienung kommen. Insbesondere die Möglichkeit einer zuverlässigen Bedienung bei einem größeren Abstand zu der zu bedienenden Bedienoberfläche bietet gerade bei der Gestaltung von "Universal Designs" für Geräte zahlreiche Vorteile. So kann eine sitzende Person (z.B. ein Rollstuhlfahrer / eine Rollstuhlfahrerin) die Bedienelemente einer oben hängenden Dunstabzugshaube sicher bedienen.

Die Erfindung betrifft ein elektrisches Gerät mit
- einer Oberfläche,
- einem Sensor, der ausgebildet ist, eine von der Oberfläche räumlich entfernte Zeigeposition eines Nutzers in Richtung der Oberfläche zu sensieren,
- einer Visualisierungseinheit, welche ausgebildet ist, die sensierte Zeigeposition auf der Oberfläche bewegungssynchron mit einer Zeigebewegung des Nutzers anzuzeigen.

Die mit dem elektrischen Gerät bereitgestellte berührungslose Bedienung, die per Fingerzeig des Nutzers erfolgt, nutzt eine bewegungssynchrone Visualisierung der Nutzerbewegung im Bereich der Oberfläche. Dem Nutzer wird während der Zeit der Eingabe seine Zeigeposition auf der Oberfläche angezeigt, und der Nutzer wird auf diese Weise in die Lage versetzt, genau eine Funktion bzw. Einstellung des elektrischen Geräts auszuwählen, die er zum aktuellen Zeitpunkt verändern möchte. Die dargestellte Zeigeposition entspricht dabei dem (ungefähren) Schnittpunkt der Verlängerung des zeigenden Armes / der zeigenden Hand mit der Oberfläche. Die Geste des direkten Zeigens mit der Hand bzw. dem ausgestreckten Zeigefinger ist eine in allen Kulturen verstandene Geste, die bereits im frühen Kindesalter erlernt wird. Die Verwendung eines solchen vertrauten Elements zwischenmenschlicher Interaktion bzw. Kommunikation in einen Bereich der Interaktion mit elektrischen Geräten zu übertragen, ist vorteilhaft, da sie von dem Nutzer nicht erst erlernt werden muss. Besonders vorteilhaft bei der berührungslosen Bedienung des elektrischen Geräts bei gleichzeitiger bewegungssynchroner Darstellung der Zeigeposition ist die automatische Positionskorrektur der Zeigeposition durch den Nutzer selbst. Stellt der Nutzer eine Abweichung zwischen der angezeigten Zeigeposition und seiner Wunschposition fest, führt er selbstständig eine Korrektur der Bewegung z.B. durch eine Armbewegung durch.

Anstelle einer direkten Berührung wie z.B. bei einer Touchbedienung und/oder einem Touchscreen stellt das Zeigen des Nutzers auf die Oberfläche die auszuwertende Eingabe dar. Das Auswerten des Fingerzeigs bzw. Deutens des Nutzers z.B. auf ein bestimmtes Element der Oberfläche wie z.B. einer Bedienblende bei gleichzeitigem räumlichem Abstand zwischen der Hand des Nutzers sowie der eigentlichen Oberfläche z.B. Bedienblende setzt eine geeignete Sensorik bzw. Hardware voraus, die durch den Sensor (bzw. ggf. mehrere Sensoren, die ein Sensorsystem bilden) bereitgestellt wird, der zum Messen und Steuern und/oder Regeln ausgebildet ist. Es wird daher eine berührungslose Bedienung per Fingerzeig mit synchroner visueller Darstellung der Bedienposition bereitgestellt.

Für das räumliche Auswerten der Zeigeposition in einem Abstand von wenigen Zentimetern bis mehreren Metern vor der Oberfläche können verschiedene Arten von Sensoren verwendet werden. In einer bevorzugten Ausführungsform weist der Sensor einen TOF (Time-of-flight)-Sensor, Lidar-Sensor, Radar-Sensor, Ultraschall-Sensor, pyroelektrischen Sensor, IR (Infrarot)-Array-Sensor, eine Kamera im sichtbaren oder unsichtbaren Lichtspektrum oder deren Kombinationen auf. Weiterhin können für das Verorten der Zeigeposition Daten bzw. Sensor-Informationen sogenannter Wearables wie z.B. Smartwatches, smarter Ringe, smarter Armbänder etc. verwendet werden.

Bevorzugt weist die Visualisierungs- bzw. Anzeigeeinheit eine lineare oder eine flächige Anordnung von ein- oder mehrfarbigen Lichtelementen, ein- oder mehrfarbigen LEDs (Leuchtdioden), ein oder mehrere Displays (alternativ aber auch kein Display), eine Projektionseinrichtung, eine Darstellung der Zeigeposition mittels Laserstrahls, oder Kombinationen davon auf, um die sensierte Zeigeposition anzuzeigen. Diese Arten der Visualisierungseinheit sind für das bewegungssynchrone Visualisieren der aktuellen Zeigeposition vorteilhaft.

Die Oberfläche kann eine gesamte Oberfläche des elektrischen Geräts oder eine Teil-Oberfläche des elektrischen Geräts darstellen. Die Oberfläche kann eine Gehäuseoberfläche des elektrischen Geräts sein. Dann kann der Nutzer auf das elektrische Gerät z.B. in einem Geräteverbund oder als Einzelgerät zeigen, um eine Interaktion mit dem elektrischen Gerät auszuwählen oder zu beginnen.

Die Oberfläche kann auch eine Oberfläche eines Gerätebauteils des elektrischen Geräts sein wie z.B. eine Gerätetür. Mittels Zeigen auf die oder Greifen zu der Gerätetür kann der Nutzer so z.B. die Gerätetür öffnen oder schließen. Das elektrische Gerät weist bevorzugt eine Steuereinheit auf, die zu einer cloudbasierten Auswertung geeignet ist. Das elektrische Gerät kann auch eine Kamera an und/oder in der Gerätetür aufweisen.

Die Oberfläche kann auch eine Oberfläche von Bereichen in dem geöffneten elektrischen Gerät sein. So kann der Nutzer eine Ebene und/oder einen Bereich in dem elektrischen Gerät wie einem Kühl- und/oder Gefrierschrank, einem Backofen, einem Weinlagerschrank, einem Geschirrspüler, in einem Kaffeeautomat wie z.B. Tank, Bohnenbehälter, Entkalkungskartusche etc. wählen. Die Oberfläche kann auch eine Oberfläche von Bereichen in dem geschlossenen elektrischen Gerät sein, wenn es z.B. ein durchsichtiges Gehäuse oder eine durchsichtige Gerätetür aufweist. Wenn z.B. der Kaffeeautomat mehrere Bohnenbehälter aufweist, so kann der Nutzer durch Zeigen auf einen der Bohnenbehälter anzeigen, dass er Kaffee mit Bohnen aus diesem Bohnenbehälter zubereitet haben möchte. Gleichermaßen kann der Nutzer z.B. bei einem Kochfeld, mittels Zeigens auf bestimmte Bereiche des Kochfeldes wie z.B. Kochstellen z.B. deren Leistungsstufen auswählen und/oder ändern. Die positionsgenaue Visualisierung der Zeigeposition muss in diesen Fällen durch entsprechende Elemente sichergestellt werden.

Die Oberfläche kann ein vorbestimmter Bereich des elektrischen Geräts sein, der derart ausgebildet ist, dass ein Zeigen des Nutzers auf ihn, eine vorbestimmte und/oder angelernte Funktion an ihm oder einem weiteren elektrischen Gerät ausführt. So ist es möglich, dass der Nutzer auf den vorbestimmten Bereich zeigt, und ein Möbelaktor, eine Beleuchtung, ein Audiogerät, TV-Gerät gesteuert wird.

In einer bevorzugten Ausführungsform ist die Oberfläche als eine Bedienoberfläche einer Bedienblende des elektrischen Geräts ausgebildet. Je nach Aufbau der Bedienblende ist weiterhin die Kombination aus verschiedenen Visualisierungseinheitsarten vorteilhaft. So kann die Visualisierung der Zeigeposition in einem Bereich der Bedienblende z.B. mittels Lichtelementen erfolgen und in einem anderen Bereich der Bedienblende durch ein dort vorhandenes Display erfolgen. Die Visualisierungseinheit weist in diesem Fall z.B. Lichtelemente und ein Display auf. Geht die Zeigepositionsvisualisierung bzw. -darstellung z.B. von dem Bereich mit Lichtelement-Darstellung z.B. 1D oder 2D in den Bereich mit Displaydarstellung über, so erfolgt ein Visualisierungs- bzw. Darstellungswechsel. Verlässt die Zeigepositionsdarstellung den Displaybereich wieder, so erfolgt ein erneuter Wechsel der Darstellung in Abhängigkeit von in der Bedienblende verbauten Anzeigekomponenten der Visualisierungseinheit. Die Visualisierungseinheit ist bevorzugt ausgebildet, bei dem Übergang der Darstellung von einem Bereich in einen weiteren benachbarten Bereich zu keinem Zeitpunkt zwei Zeigepositionen darzustellen, weil dies den Nutzer bei seiner Auswahl verunsichern bzw. stören kann.

Bevorzugt ist die Oberfläche mit einem Verschwindeeffekt bereitgestellt. Für die Visualisierung der aktuellen Zeigeposition z.B. mittels z.B. mehrfarbiger Lichtelemente ist die Nutzung einer Oberfläche bzw. Bedienblende mit einem Verschwindeeffekt sinnvoll. Dieser ermöglicht, dass nur im Bereich des Zeigezieles eine Visualisierung der Zeigeposition erfolgt und der Rest der Oberfläche bzw. Bedienblende vom Nutzer in der eigentlichen Dekorfarbe bzw. Dekorbedruckung wahrgenommen wird.

Bevorzugt weist das elektrische Gerät eine Steuereinheit auf, welche ausgebildet ist, die auf der Oberfläche angezeigte Zeigeposition in Abhängigkeit von der sensierten Zeigeposition im zeitlichen Verlauf kontinuierlich zu aktualisieren. Dadurch wird sichergestellt, dass die Visualisierung der Zeigeposition bewegungssynchron erfolgt. Die Steuereinheit ist bevorzugt Teil des Sensors. Wird kein Zeigen auf den Bereich der Bedienblende erkannt, erfolgt keine Anzeige einer Zeigeposition.

In einer bevorzugten Ausführungsform ist die Steuereinheit weiterhin ausgebildet, eine der visualisierten bzw. angezeigten Zeigeposition zugeordnete Funktion auszuführen, wenn die visualisierte Zeigeposition für eine vorbestimmte Zeitdauer gehalten wird. Dadurch wird die Eingabe des Nutzers ausgeführt. Die vorbestimmte Zeitdauer ist z.B. 1 Sek.

In einer weiteren bevorzugten Ausführungsform ist die Steuereinheit weiterhin ausgebildet, eine der visualisierten bzw. angezeigten Zeigeposition zugeordnete Funktion auszuführen, wenn der Nutzer mit dem zeigenden Finger eine kurze Tippbewegung in Richtung der Bedienfläche ausführt (als würde er eine in der Luft schwebende Oberfläche per Touch bedienen). Alternativ kann eine Auswahl auch durch kurzes Zusammenführen von Zeigefinger und Daumen der zeigenden Hand (oder der anderen Hand) erfolgen.

In einer weiteren bevorzugten Ausführungsform werden dem Nutzer ein Abweichen der Hand / des Armes aus dem Erfassungsbereich des Sensor(system)s und/oder der erkannte Abstand mittels des dargestellten Zeigers visualisiert. Z.B. in folgender Weise:
- größerer Abstand --> breiterer Zeiger,
- geringerer Abstand --> schmaler bis punktförmiger Zeiger,
- Abweichen der Zeigeposition aus Erfassungsbereich --> Veränderung der Helligkeit des Zeigers,
- ggf. Veränderung der Anzeigefarbe für bestimmte Eingabesituationen.

Bevorzugt ist die Steuereinheit weiterhin ausgebildet, das Absenken der Hand bzw. das Absenken des Armes bzw. das Entfernen der Hand bzw. des Armes aus dem der Bedienfläche zugeordneten Erfassungsbereich nach einer vorgebbaren Verzögerungszeit als Ende der Eingabe zu erkennen.

Bevorzugt ist die Steuereinheit weiterhin ausgebildet ist, bei und/oder nach Beginn der Ausführung der Funktion die Ausführung der Funktion zu stoppen, wenn der Sensor ein vorbestimmtes Handzeichen des Nutzers zum Stoppen der auszuführenden Funktion sensiert. Z.B. kann die Steuereinheit ausgebildet sein, eine in Richtung der Fläche gerichtete flache Hand des Nutzers als Stopp zu erkennen und die momentane Interaktion des Nutzers mit dem elektrischen Gerät stoppen.

In einer bevorzugten Ausführungsform ist das elektrische Gerät als ein Backofen, ein Dampfgarer, ein Kaffeevollautomat, ein Pizzaofen, ein Herd, eine Mikrowelle, eine Dunstabzugshaube, eine Spülmaschine wie ein Geschirrspüler, ein Laborspüler, ein Waschautomat, ein Trockenautomat, ein Staubsauger, ein Saugroboter, ein Kühlschrank, ein Gefrierschrank, ein Weinlagerschrank oder Kombinationen ausgebildet.

Ein Ausführungsbeispiel der Erfindung ist in den Zeichnungen rein schematisch dargestellt und wird nachfolgend näher beschrieben. Es zeigt schematisch und nicht maßstabsgerecht
- Fig. 1: eine Teil-Darstellung eines erfindungsgemäßen elektrischen Geräts und einer Bewegung eines Nutzers 4; und
- Fig. 2 bis 7: jeweils eine Teil-Darstellung des in Fig. 1 gezeigten elektrischen Geräts im Laufe der Bewegung des Nutzers samt jeweils zugehörigen Diagrammen, welche jeweils einen Abstand einer erkannten Zeigeposition über x-Position und Helligkeiten von Linienelementen in verschiedenen Farben über x-Position zeigen.

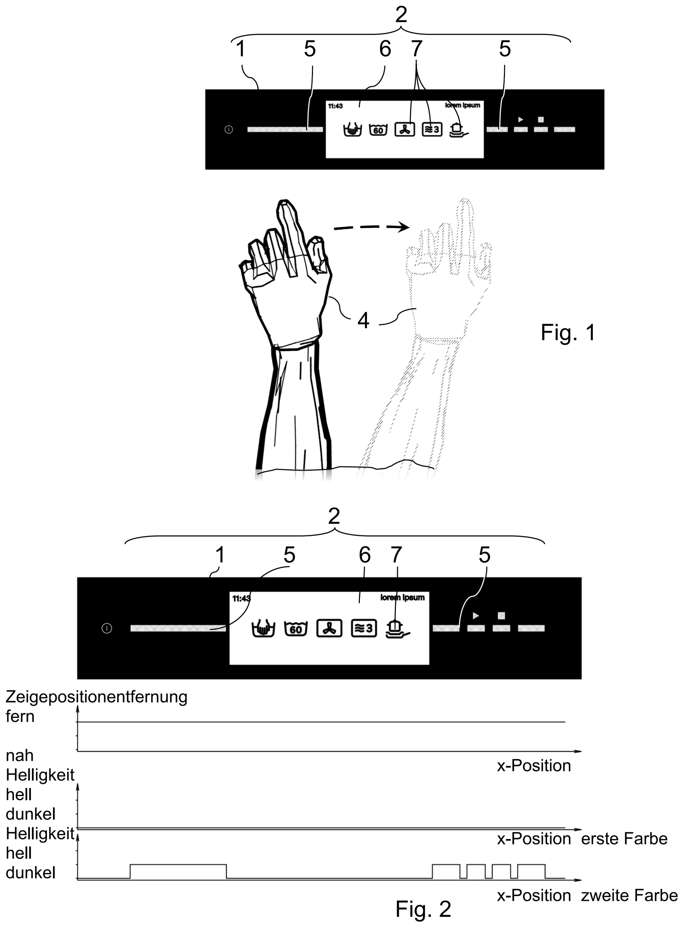

Fig. 1 zeigt eine Teil-Darstellung eines erfindungsgemäßen elektrischen Geräts und einer Bewegung eines Nutzers 4. Gezeigt ist die Oberfläche 1 des elektrischen Geräts, welche als eine Bedienoberfläche einer Bedienblende ausgebildet ist. Das elektrische Gerät weist einen Sensor (nicht gezeigt) auf, der ausgebildet ist, eine von der Oberfläche 1 räumlich entfernte Zeigeposition des Nutzers 4 zu sensieren, und eine Visualisierungseinheit 2 auf, welche ausgebildet ist, die sensierte Zeigeposition auf der Oberfläche 1 bewegungssynchron mit einer Zeigebewegung des Nutzers 4 anzuzeigen. Die Visualisierungseinheit 2 weist mehrere lineare Lichtelemente 5 und ein Display 6 mit mehreren Elementen 7 in Form von Bedienelementen auf. Ein Nutzer 4 führt mit seinem Arm samt Hand und Fingern eine Bewegung in Pfeilrichtung aus, wobei er dabei im Verlauf der Bewegung auf eines der Lichtelemente 5 und das Display 6 zeigt.

Fig. 2 bis 7 zeigen jeweils eine Teil-Darstellung des in Fig. 1 gezeigten elektrischen Geräts im Laufe der Bewegung des Nutzers samt jeweils zugehörigen Diagrammen, welche jeweils einen Abstand einer sensierten Zeigeposition über x-Position und Helligkeiten von Linienelementen in verschiedenen Farben über x-Position zeigen.

Fig. 2 zeigt die Oberfläche 1, während keine Zeigeposition des Nutzers (nicht gezeigt) sensiert wird. Die linearen Lichtelemente 5 sind zweifarbig. Wenn keine Zeigeposition des Nutzers sensiert wird, d.h. die Zeigepositionentfernung von dem Sensor zu entfernt ist, ist eine Helligkeit der ersten Farbe dunkel, und eine Helligkeit der zweiten Farbe hell.

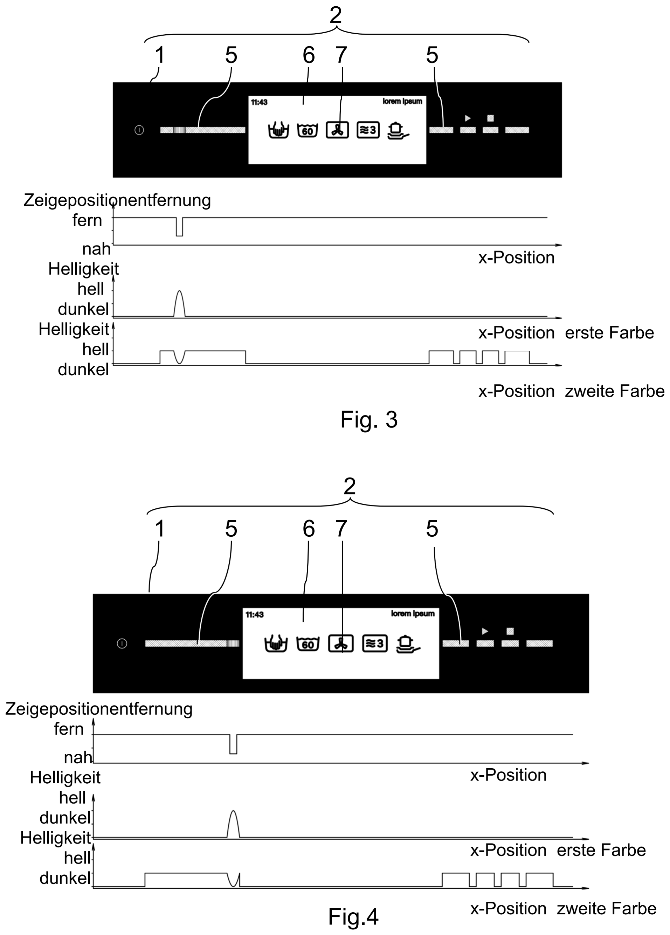

Fig. 3 zeigt die Oberfläche 1, während eine Zeigeposition des Nutzers (nicht gezeigt) sensiert wird. In Bereichen des linearen Lichtelementes, in denen die Zeigepositionsentfernung von dem Sensor zu weit entfernt ist, ist die Helligkeit der ersten Farbe dunkel, und die Helligkeit der zweiten Farbe hell, während in den Bereichen des linearen Lichtelementes, in denen die Zeigepositionentfernung zu dem Sensor nah ist, die Helligkeit der ersten Farbe hell und die Helligkeit der zweiten Farbe dunkel sind, so dass dem Nutzer die sensierte Zeigeposition angezeigt wird.

Fig. 4 entspricht der Fig. 3 mit dem Unterschied, dass sich die sensierte Zeigeposition benachbart zu dem Display 6 befindet.

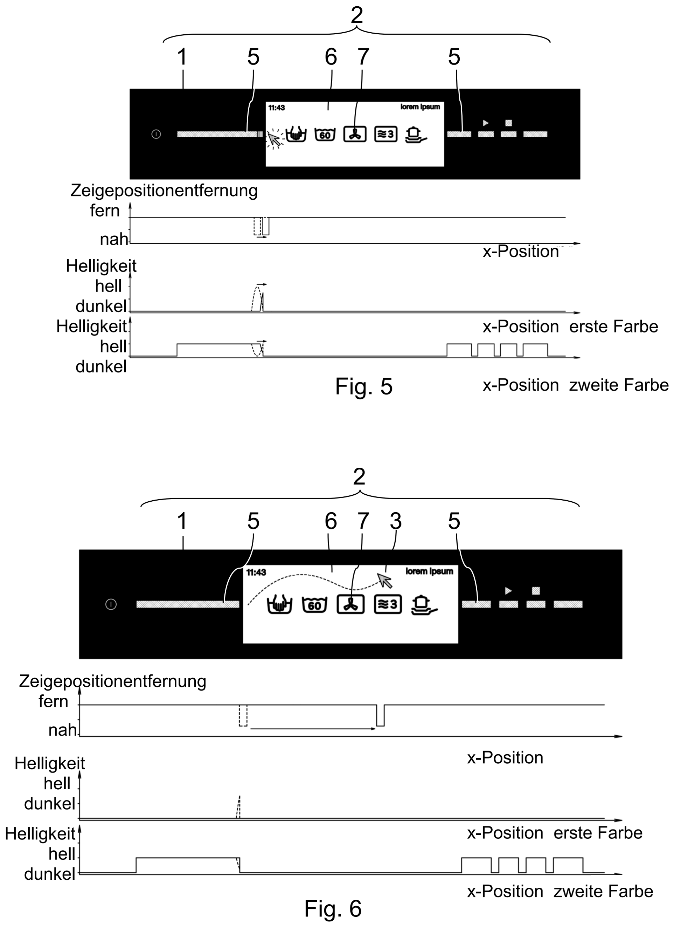

Fig. 5 entspricht der Fig. 4 mit dem Unterschied, dass eine Bewegung nach rechts dargestellt ist, mit der die sensierte Zeigeposition den Bereich des linearen Lichtelements 5 verlässt und in den Bereich des Displays 6 in Pfeilrichtung übergeht. Mit dem Wechsel in den Bereich des Displays 6 wird der Lichtpunkt der zweiten Farbe des linearen Lichtelements 5 ausgeblendet. Gleichzeitig wird ein bewegungssynchrones Zeigerelement im Display 6 mittels der Visualisierungseinheit 2 eingeblendet mit einem angedeuteten Strahlen.

Fig. 6 entspricht der Fig. 5 mit dem Unterschied, dass eine Bewegung des Nutzers (nicht gezeigt) im Bereich des Displays 6 dargestellt ist. Die gestrichelte Linie im Bereich des Displays 6 symbolisiert den zurückgelegten Weg des Zeigers und ist nicht Bestandteil der tatsächlichen Displaydarstellung.

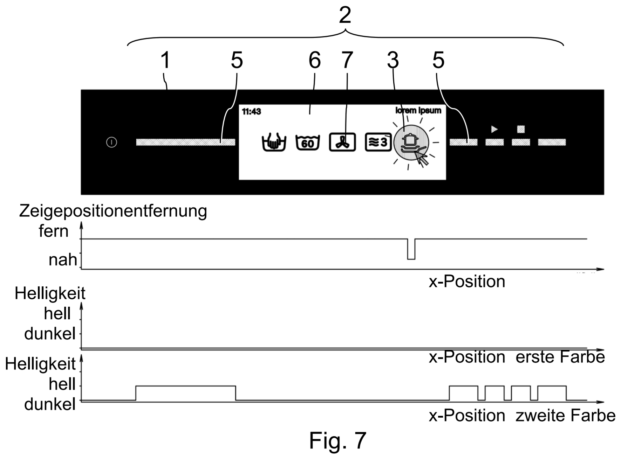

Fig. 7 entspricht der Fig. 6 mit dem Unterschied, dass ein kurzes Verweilen von z.B. ca. 1 Sekunde des Zeigers über einem der Elemente 7 im Bereich des Displays 6 dargestellt ist.

Das Verweilen des Zeigers für die beispielhaft genannte Zeit aktiviert die ausgewählte Funktion, was durch das angedeutete Strahlen dargestellt ist. Die Auswahl wird dem Nutzer (nicht gezeigt) z.B. durch eine visuelle Hervorhebung des entsprechenden Elements 7 angezeigt. Im dargestellten Beispiel ist dies das ganz rechts im Display 6 angeordnete Element.

### Bezugszeichenliste

- 1: Oberfläche
- 2: Visualisierungseinheit
- 3: Zeigeposition
- 4: Nutzer
- 5: Lichtelement
- 6: Display
- 7: Element

## Patentansprüche

1. Elektrisches Gerät mit
- einer Oberfläche (1),
- einem Sensor / Sensorsystem, der / das ausgebildet ist, eine von der Oberfläche (1) räumlich entfernte Zeigeposition (3) eines Nutzers (4) zu sensieren,
- einer Visualisierungseinheit (2), welche ausgebildet ist, die sensierte Zeigeposition (3) auf der Oberfläche (1) bewegungssynchron mit einer Zeigebewegung des Nutzers (4) anzuzeigen.

2. Elektrisches Gerät nach Anspruch 1, **dadurch gekennzeichnet, dass** der Sensor / das Sensorsystem einen TOF (Time-of-flight)-Sensor, Lidar-Sensor, Radar-Sensor, Ultraschall-Sensor, pyroelektrischen Sensor, IR (Infrarot)-Array-Sensor, eine Kamera im sichtbaren oder unsichtbaren Lichtspektrum oder deren Kombinationen aufweist.

3. Elektrisches Gerät nach Anspruch 1 oder 2, **dadurch gekennzeichnet, dass** die Visualisierungseinheit (2) eine lineare oder eine flächige Anordnung von ein- oder mehrfarbigen Lichtelementen (5), ein- oder mehrfarbigen LEDs (Leuchtdioden), ein- oder mehrfarbigen OLEDs (organischen Leuchtdioden), ein oder mehrere Display(s) (6), eine Projektionseinrichtung, eine Darstellung der sensierten Zeigeposition mittels Laserstrahls oder deren Kombinationen aufweist, um die sensierte Zeigeposition anzuzeigen.

4. Elektrisches Gerät nach einem der vorangehenden Ansprüche, **dadurch gekennzeichnet, dass** die Oberfläche (1) als eine Bedienoberfläche einer Bedienblende des elektrischen Geräts ausgebildet ist.

5. Elektrisches Gerät nach einem der vorangehenden Ansprüche, **dadurch gekennzeichnet, dass** die Oberfläche (1) mit einem Verschwindeeffekt bereitgestellt ist.

6. Elektrisches Gerät nach einem der vorangehenden Ansprüche, **gekennzeichnet durch** eine Steuereinheit, welche ausgebildet ist, die auf der Oberfläche (1) angezeigte Zeigeposition (3) in Abhängigkeit von der sensierten Zeigeposition (3) im zeitlichen Verlauf zu aktualisieren.

7. Elektrisches Gerät nach einem der vorangehenden Ansprüche, **dadurch gekennzeichnet, dass** die Steuereinheit weiterhin ausgebildet ist, eine der angezeigten Zeigeposition zugeordnete Funktion auszuführen, wenn die angezeigte Zeigeposition für eine vorbestimmte Zeitdauer gehalten wird.

8. Elektrisches Gerät nach Anspruch 7, **dadurch gekennzeichnet, dass** die Steuereinheit weiterhin ausgebildet ist, bei und/oder nach Beginn der Ausführung der Funktion die Ausführung der Funktion zu stoppen, wenn der Sensor ein vorbestimmtes Handzeichen des Nutzers zum Stoppen der auszuführenden Funktion sensiert.

9. Elektrisches Gerät nach einem der vorangehenden Ansprüche, **dadurch gekennzeichnet, dass** es als ein Backofen, ein Dampfgarer, ein Kaffeevollautomat, ein Pizzaofen, ein Herd, eine Mikrowelle, eine Dunstabzugshaube, eine Spülmaschine wie ein Geschirrspüler, ein Laborspüler, ein Waschautomat, ein Trockenautomat, ein Staubsauger, ein Saugroboter, ein Kühlschrank, ein Gefrierschrank, ein Weinlagerschrank oder deren Kombinationen ausgebildet ist.
